# EUROPÄISCHE PATENTSCHRIFT

(11) **EP 1 484 153 B1**
(45) Veröffentlichungstag und Bekanntmachung des Hinweises auf die Patenterteilung: **26.12.2007**
(21) Anmeldenummer: 04017582.0
(22) Anmeldetag: 04.08.2000
(51) Int. Cl.: B29C 45/04, B29C 45/16

(54) **Horizontalspritzgiessmaschine**
Horizontal injection moulding machine
Machine à mouler par injection horizontale

(30) Priorität: 06.08.1999 DE 19937200
(43) Veröffentlichungstag der Anmeldung: 08.12.2004
(62) Teilanmeldung aus: 02012663.7
(73) Patentinhaber: Krauss Maffei GmbH, 80997 München (DE)
(72) Erfinder: Lichtinger, Peter, 82256 Fürstenfeldbruck (DE)
(74) Vertreter: Wilhelm, Ludwig

(56) Entgegenhaltungen:
- EP-A- 0 538 203
- EP-A- 0 794 045
- EP-A- 0 895 848
- DE-A- 2 250 002
- DE-A- 3 914 846
- DE-A- 4 313 951
- DE-U- 8 509 642
- GB-A- 2 300 142
- US-A- 3 838 961
- US-A- 4 330 257
- US-A- 4 408 981
- PATENT ABSTRACTS OF JAPAN Bd. 11, Nr. 250 (M-616), 14. August 1987 (1987-08-14) -& JP 62 060618 A (JAPAN STEEL WORKS LTD:THE), 17. März 1987 (1987-03-17)

## Beschreibung

Die Erfindung betrifft eine Horizontalspritzgießmaschine gemäß dem Oberbegriff von Patentanspruch 1.

Aus dem Stand der Technik (US 4,330,257; EP 0 922 556 A1) sind Vorrichtungen zum Halten und Drehen von Formen oder Formteilen in einer Horizontalspritzgießmaschine bekannt, bei denen zwischen den Werkzeugaufspannplatten ein in Maschinenlängsrichtung verschiebbarer Drehblock (Werkzeugmittelplatte) als Formträger mit prismatischem Querschnitt vorgesehen ist, der um eine senkrecht auf der Maschinenlängsachse stehende Achse drehbar gelagert ist. Um den Drehblock einerseits in Maschinenlängsachse verschieben und andererseits um eine dazu senkrecht stehende Achse drehen zu können, ist ein System vorgesehen, bei dem der Drehblock in Trägern drehbar gelagert ist, wobei diese Träger wenigstens an den beiden unteren Holmen der Spritzgießmaschine (US 4,330,257) oder an allen vier Holmen (EP 0 922 556 A1 ) verschiebbar geführt und abgestützt ist. Damit hierbei eine präzise Führung des Trägers bzw. des daran angebrachten Drehblocks möglich ist, sind hochpräzise und in engen Toleranzen ausgelegte Stütz- und Führungselemente erforderlich, die systembedingt in großen Abständen zueinander angeordnet sind. Daher reagiert diese Abstützung empfindlich auf Temperaturschwankungen, d.h. bei Abkühlung und einer damit einhergehenden Schrumpfung wird das Spiel in den Lagern größer, während bei Erwärmung und einer damit einhergehenden Ausdehnung die Gefahr besteht, dass die Stütz- und Führungselemente auf den Holmen verklemmen. Um letzteres zu vermeiden, dürfen die Toleranzen in den Stütz- und Führungselementen nicht zu eng, d.h. nicht zu präzise ausgelegt werden. Weiterhin nachteilig ist, dass die Holme je nach Ausführung des Drehblocks und der Träger mit einem erheblichen Gewicht belastet werden (unzulässige Durchbiegung) und dass die bei der Rotation des Drehblocks auftretenden Drehmomente voll von den Holmen aufgenommen werden müssen, was gerade beim Anfahren und Abbremsen der Drehbewegung zu beachtlichen Belastungen führt.

Aus der US 3,838,961 ist eine Drei-Platten-Horizontalspritzgießmaschine bekannt, die die zuvor genannten Nachteile dadurch vermeidet, dass der Drehblock längsverschieblich an einer Traverse aufgehängt ist, die zum einen auf der festen Werkzeugaufspannplatte und zum anderen auf der Abstützplatte abgestützt und befestigt ist. Auf diese Weise hängt der Drehblock zwischen der festen Werkzeugaufspannplatte und der beweglichen Werkzeugaufspannplatte und die Holme der Drei-Platten-Horizontalspritzgießmaschine werden weder mit Gewichts- noch mit Drehmomenten belastet. Nachteilig an dieser Anordnung ist zum einen, dass immer zwei feststehende Platten erforderlich sind, auf denen die Traverse abgestützt werden kann. Ein weiterer Nachteil besteht darin, dass die obenliegende Traverse und die obenliegende Dreheinrichtung nur einen seitlichen Zugang zu den Werkzeugteilen erlaubt. Daher müssen die Werkzeugteile von der Seite her ein- und ausgebaut werden, was sich gerade bei schweren Werkzeugteilen als schwierig gestaltet. Der Ein- und Ausbau des gesamten Werkzeugs als Einheit würde es erforderlich machen, die Traverse mit der daran aufgehängten Dreheinrichtung zunächst abzubauen und nach dem Werkzeugeinbau wieder anzubringen.

Ausgehend hiervon liegt der Erfindung die Aufgabe zugrunde, eine Horizontalspritzgießmaschine mit einer Dreheinrichtung für Spritzgießwerkzeuge anzugeben, bei der die Holme unbelastet sind und bei der gleichzeitig der Ein- und Ausbau der Werkzeuge vereinfacht ist.

Die Lösung dieser Aufgabe erfolgt durch eine Horizontalspritzgießmaschine mit den Merkmalen von Patentanspruch 1. Weiterentwicklungen finden sich in den Unteransprüchen 2 bis 11.

Ein Vorteil der Erfindung liegt darin, dass die Dreheinrichtung völlig von den Holmen losgelöst ist und diese somit weder mit Gewichts- noch mit Drehmomenten belastet werden, und dass im Gegensatz zu der zuvor erwähnten US 3,828,961 auf eine beim Werkzeugwechsel hinderliche Traverse verzichtet werden kann. Dies hat den Vorteil, dass das Werkzeug als Ganzes problemlos aus- und eingebaut werden kann, so dass ein aufwendiges Justieren der einzelnen Werkzeugteile entfallen kann.

Die H-förmige Ausgestaltung der Grundplatte bietet zusätzliche Vorteile, nämlich eine stabile Abstützung, wenn die Schenkel des H entsprechend lang ausgelegt sind (Unteranspruch 10), sowie eine leichte Formteilentnahme in dem Freiraum zwischen den Schenkeln des H (Unteranspruch 5). Bei schweren Werkzeugmittelplatten ist es vorteilhaft, die Grundplatte derart groß auszulegen, dass sie bis außerhalb des Bereichs der Werkzeugaufspannplatten reicht (Unteranspruch 11). Mittels Transportlaschen und Ringschrauben kann ein komplettes Etagenwerkzeug im geschlossenen Zustand in den Bereich zwischen die Werkzeugaufspannplatten herabgelassen und auf den Drehteller montiert werden (Unteranspruch 7), wobei vorteilhafterweise Zentriermittel vorgesehen sind. Das Öffnen der Werkzeughälften wird vorteilhaft durch hydraulische Abdrückzylinder in den Trennebenen zwischen dem Werkzeugmittelteil und der feststehenden bzw. der beweglichen Werkzeughälfte unterstützt (Unteranspruch 9).

Nachfolgend soll die Erfindung anhand eines Ausführungsbeispiels und unter Bezugnahme auf die Figuren 1 bis 7 näher erläutert werden. Es zeigen:
- Fig. 1:: Eine teilweise geschnittene Seitenansicht einer erfindungsgemäßen Spritzgießmaschine
- Fig. 2:: System zur Bewegung der Dreheinrichtung in Maschinenlängsachse;
- Fig.3:: schematische Darstellung des gesamten Werkzeugs mit Transportlaschen, Ringschrauben und Abdrückzylindern;
- Fig. 4:: eine Draufsicht auf die Dreheinrichtung;
- Fig. 5:: einen Schnitt entlang der Linie CD in Fig, 4, wobei die linke Hälfte die Ansicht in Richtung des Pfeiles A in Fig. 1 darstellt, während die rechte Hälfte die Ansicht in Richtung des Pfeils B in Fig. 1 darstellt;
- Fig.6:: eine Draufsicht auf das Antriebssystem für den Drehteller:
- Fig.7:: schematische Darstellung (in Seitenansicht) eines weiteren Verwendungszwecks für die Dreheinrichtung.

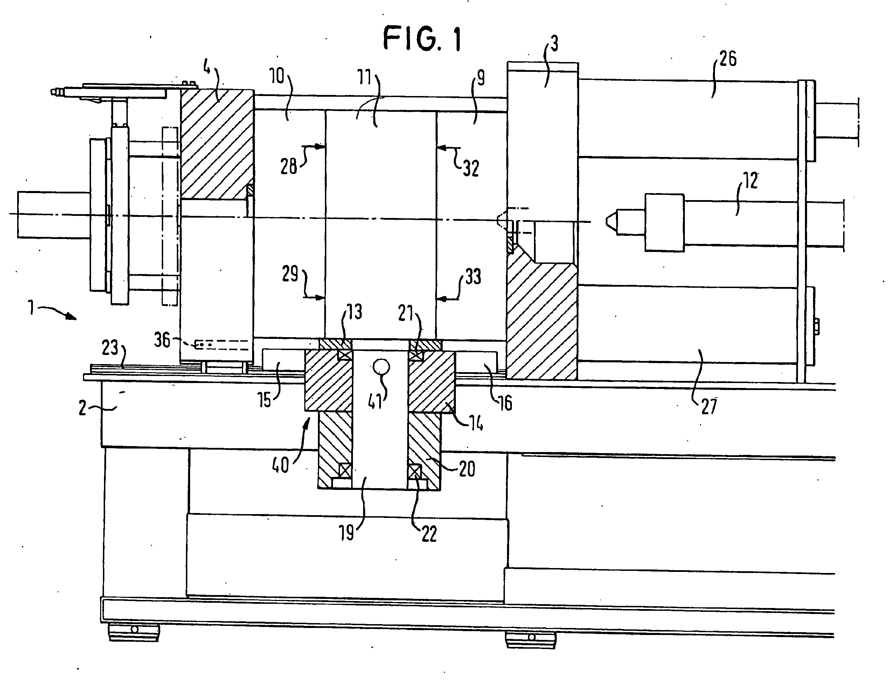

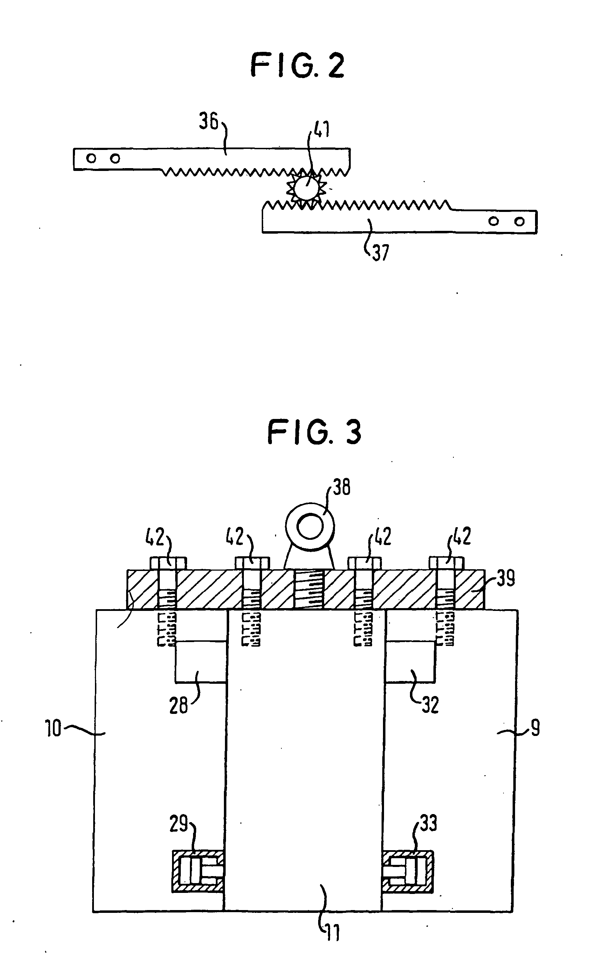

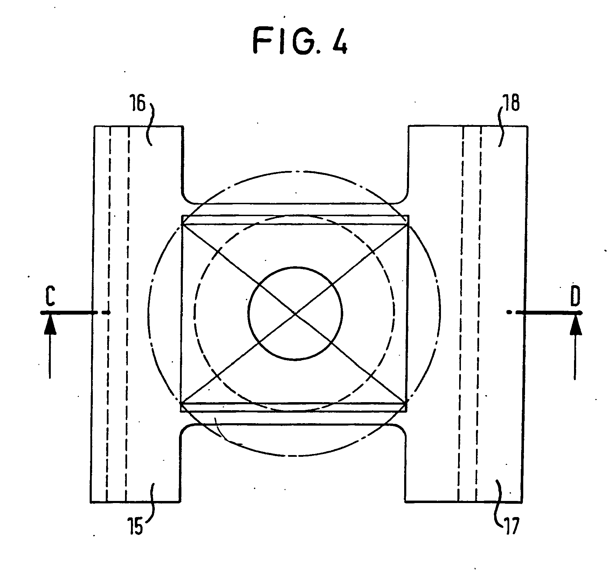

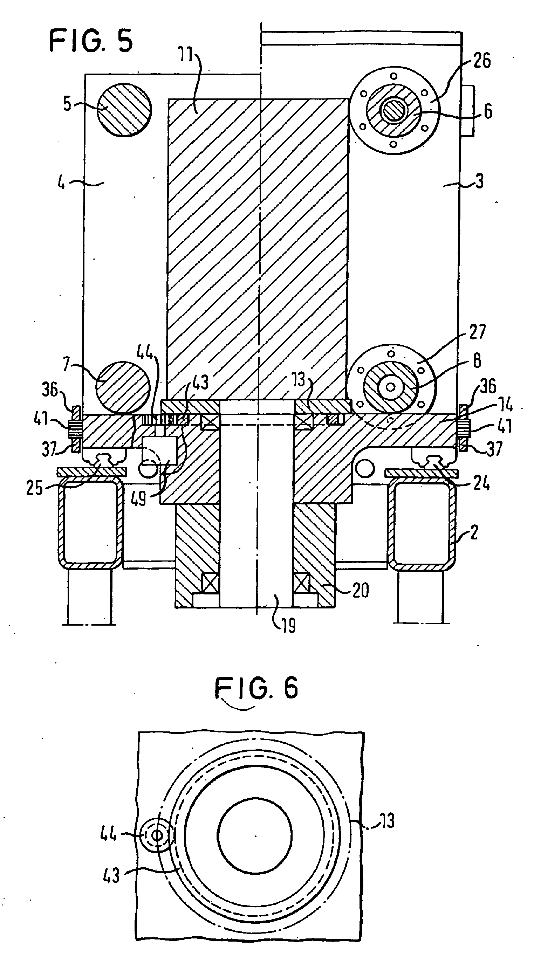

Nachfolgend wird die Erfindung anhand einer Zwei-Platten-Horizontalspritzgießmaschine mit einem Etagenwerkzeug und einer Werkzeugmittelplatte, nachfolgend als Wendeplatte bezeichnet, näher beschrieben. Bei der in den Fig. 1 bis 6 dargestellten Spritzgießmaschine 1 sind auf einem Maschinenbett 2 eine feste Werkzeugaufspannplatte 3 und eine bewegliche, auf der Maschinenbettführung 23, 24 und 25 geführte und an Holmen 5 bis 8 gezogene, Werkzeugaufspannplatte 4 angeordnet. Zwischen den Werkzeugaufspannplatten sind eine feste Werkzeughälfte 9, eine bewegliche Werkzeug hälfte 10 und zwischen diesen eine Wendeplatte 11 vorgesehen. Zwischen der festen Werkzeug hälfte 9 und der dieser zugewandten Seite der Wendeplatte 11 wird die Takt-1-Etage gebildet, während zwischen der beweglichen Werkzeughälfte 10 und der dieser zugewandten Seite der Wendeplatte 11 die Takt-2-Etage vorgesehen ist. Die Takt-1-Einspritzung erfolgt durch ein der festen Werkzeug hälfte zugeordnetes Spritzaggregat 12, während die Takt-2-Einspritzung durch ein an die bewegliche Werkzeug hälfte 10 angesetztes L-Spritzaggregat (hier nicht dargestellt) erfolgt. Die Wendeplatte 11 ist auf einer Dreheinrichtung 40 befestigt und zwar auf einem, in der Regel rechteckigen, Drehteller 13, der auf einer H-förmigen Grundplatte 14 drehbar gelagert ist. Die Schenkel des H reichen bis nahe an die Werkzeugaufspannplatten heran, wie dies in Fig. 1 für die hinteren Schenkel 15 und 16 zu sehen ist. Bei schweren Mittelplatten können zusätzliche Führungen vorgesehen werden, auf denen die Grundplatte gelagert ist und die unter den Werkzeugaufspannplatten hindurch bis außerhalb von diesen reichen können. In diesem Fall sind die Schenkel der H-förmigen Grundplatte breiter ausgeführt oder es wird auf einer oder beiden Seiten der Wendeplatte auf den Raum zwischen den Schenkel des H mehr oder weniger stark verzichtet und die Grundplatte in diesem Bereich durchgängig ausgebildet. Ein von dem Drehteller 13 nach unten weisender Drehzapfen 19 (Rotor) ist in einem entsprechenden Stator 20 und der Grundplatte 14 drehbar gelagert. Der Antrieb des Drehtellers erfolgt mittels geeigneter Antriebsmittel, z.B. mittels Zahnkranz 43, Ritzel 44 und Hydro- oder Elektromotor 49 (siehe hierzu Fig.5 und 6). Die Grundplatte 14 ist auf stabilen Linearführungen 23 (oder auf Gleitführungen) auf dem Maschinenbett 2 gelagert. Hierzu verfügt das Maschinenbett über stabile Linearschienen oder Gleitführungen 24 und 25, in die die entsprechend gestaltete Unterseite der Grundplatte eingreift. Für die Grundplatte einerseits und für die bewegliche Werkzeugaufspannplatte andererseits können verschiedene Führungen vorgesehen werden. In den Trennebenen der Takt-1 -Etage und der Takt-2-Etage sind jeweils vier Hydraulik-Zylinder 28 bis 35 symmetrisch angeordnet (siehe hierzu auch Fig.3 und 5). Diese erzeugen bei der Öffnungsbewegung einen parallelen, gleichzeitigen, kurzen Hub als zusätzliche Unterstützung für ein paralleles Auffahren des Werkzeugs. Die Längsbewegung der Dreheinrichtung 40 erfolgt mittels an den Werkzeugaufspannplatten auf beiden Seiten angelenkter Zahnstangen oder Steilgewinde-Spindeln 36,37, und an der Grundplatte angebrachter Zahnräder 41 (siehe hierzu Fig.2). Wie der Draufsicht gemäß Fig. 4 zu entnehmen ist, können fertiggestellte Formteile in den Freiraum zwischen des Schenkeln des H ausgestoßen und von einem - hier nicht dargestellten - darunter angeordneten Förderband abtransportiert werden. Es entfallen somit zusätzliche Handlingsysteme zur Formteilentnahme. Mittels Transportlaschen 39 und Ringschrauben 38 (siehe Fig.3) ist ein leichter Ein- und Ausbau des gesamten Werkzeugs als eine Einheit möglich. Die Werkzeugteile können aber auch separat ein- und ausgebaut werden, wenn auf jedem Werkzeugteil Ringschrauben 38 vorhanden sind und die Transportlaschen 39 gelöst sind. Zum Befestigen der Werkzeugmittelplatte auf dem Drehteller 13 sind in deren unteren Bereich eine oder mehrere Nuten und Bohrungen in dem auf dem Drehteller aufliegenden Teil vorgesehen, so dass Befestigungsschrauben durch diese Bohrungen in den Drehteller eingedreht werden können und die Schraubenköpfe über die Nuten zugänglich sind. Vorzugsweise sind in dem Drehteller nicht dargestellte Zentriermittel vorgesehen, um die Werkzeugmittelplatte sauber ausrichten zu können.

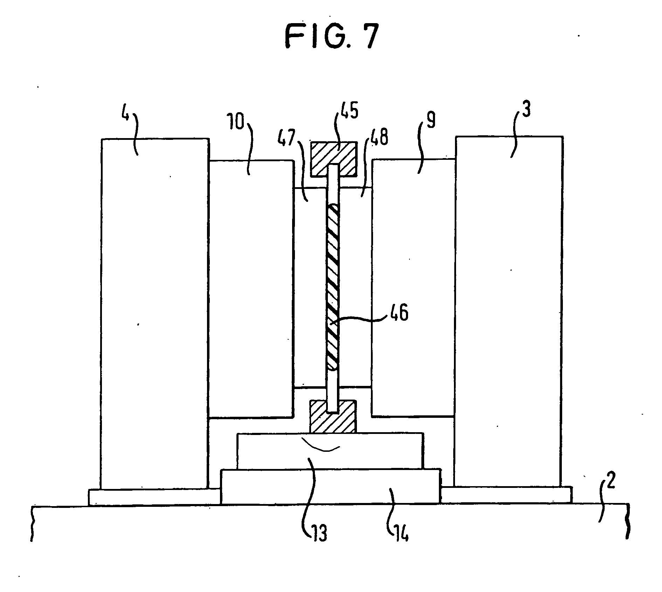

Auf der Dreheinrichtung können anstelle eines Formenträgers eines Etagenwerkzeuges auch sonstige Elemente angebracht werden. Beispielsweise kann gemäß Fig. 7 ein Halterahmen 45, d.h. ein sogenannter Indexrahmen oder eine sogenannte Indexplatte, für ein Formteil 46 vorgesehen werden, um ein Drehen dieses Formteils 46 von einem ersten Takt zu einem zweiten Takt zwischen den Werkzeughälften 9 und 10 zu ermöglichen.

### Bezugszeichenliste

- 1: Horizontalspritzgießmaschine
- 2: Maschinenbett
- 3: feste Werkzeugaufspannplatte
- 4: bewegliche Werkzeugaufspannplatte
- 5-8: Holme
- 9: feste Werkzeughälfte
- 10: bewegliche Werkzeughälfte
- 11: Wendeplatte
- 12: erstes Spritzaggregat
- 13: Drehteller
- 14: H-förmige Grundplatte
- 15,16: hintere Schenkel der H-förmigen Grundplatte
- 17,18: vordere Schenkel der H-förmigen Grundplatte
- 19: Drehzapfen
- 20: Stator
- 21,22: Kugel- oder Wälzlager
- 23: Linearführungen
- 24,25: Schienen
- 26,27: Zylinder für Bewegung der Holme 6 und 8 (entsprechende Zylinder gibt es - hier nicht gezeigt für die Holme 5 und 7)
- 28,29,30,31: Abdrückzylinder
- 32,33,34,35: Abdrückzylinder
- 36,37: Zahnstangen oder Steilgewinde-Spindeln
- 38: Ringschraube
- 39: Transportlasche
- 40: Dreheinrichtung
- 41: Zahnrad
- 42: Befestigungsschrauben
- 43: Zahnkranz
- 44: Ritzel
- 45: Indexrahmen bzw. Indexplatte
- 46: Spritzling (Produkt)
- 47,48: Formhälften

## Patentansprüche

1. Horizontalspritzgießmaschine mit einer festen (3) und einer beweglichen Werkzeugaufspannplatte (4), mit zwischen den Werkzeugaufspannplatten (3, 4) verlaufenden Holmen (5, 6, 7, 8), sowie mit einer zwischen den Werkzeugaufspannplatten (3, 4) angeordneten, parallel zur Maschinenlängsachse verschiebbaren und von den Holmen (5, 6, 7, 8) losgelösten Dreheinrichtung (40) für Spritzgießwerkzeuge,
**dadurch gekennzeichnet,**
**dass** die Dreheinrichtung (40) eine Grundplatte (14) aufweist, dass auf der Grundplatte (14) ein um eine vertikale Achse drehbar gelagerter Drehteller (13) angeordnet ist, dass an dem Drehteller (13) ein Zahnkranz (43) vorgesehen ist, und dass zum Antrieb des Drehtellers (13) ein Elektro- oder ein Hydromotor (49) vorgesehen ist, mit dem ein Zahnrad (44) antreibbar ist, das in den am Drehteller (13) vorgesehenen Zahnkranz (43) eingreift.

2. Horizontalspritzgießmaschine nach Anspruch 1,
**dadurch gekennzeichnet,**
**dass** zum Verschieben der Dreheinrichtung diese derart mit beiden Werkzeugaufspannplatten (3, 4) gekoppelt ist, dass bei der Bewegung der beweglichen Werkzeugaufspannplatte (4) die Dreheinrichtung mitbewegt wird, beispielsweise über Zahnstangen (36, 37), Spindeln, insbesondere Steilgewindespindeln, oder Hydraulikzylinder.

3. Horizontalspritzgießmaschine nach Anspruch 1,
**dadurch gekennzeichnet,**
**dass** die Dreheinrichtung separat von der beweglichen Werkzeugaufspannplatte (4) parallel zur Maschinenlängsachse verschiebbar ist, beispielsweise mittels Hydraulikzylindereinheiten.

4. Horizontalspritzgießmaschine nach einem der Ansprüche 1 bis 3,
**dadurch gekennzeichnet,**
**dass** auf dem Drehteller (13) das Mittelteil eines Etagenwerkzeugs befestigt ist, wobei das Mittelteil beispielsweise eine Mittelplatte (11) oder ein prismatischer Formenträger ist.

5. Horizontalspritzgießmaschine nach einem der Ansprüche 1 bis 4,
**dadurch gekennzeichnet,**
**dass** die Grundplatte (14) im wesentlichen H-förmig ausgebildet ist, und dass das Querstück der H-förmigen Grundplatte und der Drehteller derart ausgebildet sind, dass Formteile in dem Freiraum zwischen den Schenkeln (15,16,17,18) des H nach unten fallen können.

6. Horizontalspritzgießmaschine nach Anspruch 4 oder 5,
**dadurch gekennzeichnet,**
**dass** auf der Oberseite des Mittelteils (11) und/oder der festen (9) und/oder der beweglichen Werkzeughälfte (10) eine oder mehrere Ringschrauben (38) vorgesehen sind.

7. Horizontalspritzgießmaschine nach einem der Ansprüche 4 bis 6,
**dadurch gekennzeichnet,**
**dass** auf der Oberseite über das gesamte Werkzeug eine oder mehrere Transportlaschen (39) vorgesehen sind, mit denen die Werkzeugteile zusammengehalten und als Gesamtheit ein- und ausgebaut werden können.

8. Horizontalspritzgießmaschine nach einem der Ansprüche 1 bis 7,
**dadurch gekennzeichnet,**
**dass** auf dem Drehteller (13) Mittel zum Halten von zwischen der festen und der beweglichen Hälfte eines auf den Werkzeugaufspannplatten (3,4) aufgespannten Werkzeugs (47,48) erzeugten Formteilen (49) vorgesehen sind, beispielsweise Halteleisten oder Halterahmen (45).

9. Horizontalspritzgießmaschine nach einem der Ansprüche 1 bis 8,
**dadurch gekennzeichnet,**
**dass** jeweils im Bereich der Trennebenen von Formhälften hydraulische Abdrückzylinder (28 - 35) vorgesehen sind, wobei in jeder Trennebene mindestens zwei, vorzugsweise vier Abdrückzylinder vorgesehen sind.

10. Horizontalspritzgießmaschine nach einem der Ansprüche 1 bis 9,
**dadurch gekennzeichnet,**
**dass** die Grundplatte (14) in Maschinenlängsrichtung so weit reicht, dass bei geschlossenem Werkzeug zu jeder Werkzeugaufspannplatte (3,4) der Horizontalspritzgießmaschine lediglich ein kleiner Abstand (Sicherheitsabstand) verbleibt.

11. Horizontalspritzgießmaschine nach einem der Ansprüche 1 bis 10,
**dadurch gekennzeichnet,**
**dass** die Grundplatte (14) in Maschinenlängsrichtung so lang ausgebildet ist, dass sie bei geschlossenem Werkzeug unter den Werkzeugaufspannplatten (3,4) hindurch bis in den Bereich außerhalb der Werkzeugaufspannplatten (3,4) reicht.

## Claims

1. A horizontal injection moulding machine comprising a fixed (3) and a movable tool clamping plate (4) with spars (5, 6, 7, 8) running between the tool clamping plates (3, 4) and comprising a rotating device (40) for injection moulding tools which is disposed between the tool clamping plates (3, 4), which can be displaced parallel to the longitudinal axis of the machine and is not attached to said spars (5, 6, 7, 8), **characterised in that** the rotating device (40) comprises a base plate (14), that is a rotary plate (13) mounted rotatably about a vertical axis is disposed on the base plate (14), that a sprocket wheel (43) is provided on the rotary plate (13) and that an electric or hydraulic motor (49) is provided to drive the rotary plate (13), which can drive a gear wheel (44) which engages in the sprocket wheel (43) provided on the rotary plate (13).

2. The horizontal injection moulding machine according to claim 1, **characterised in that** for displacement of the rotating device, this is coupled to two tool clamping plates (3, 4) in such a manner that during movement of the movable tool clamping plate (4) the rotating device is also moved, for example, by means of racks (36, 37), spindles, in particular, steep-pitch threaded spindles or hydraulic cylinders.

3. The horizontal injection moulding machine according to claim 1, **characterised in that** the rotating device can be displaced separately from the movable tool clamping plate (4) parallel to the longitudinal axis of the machine, for example, by means of hydraulic cylinder units.

4. The horizontal injection moulding machine according to any one of claims 1 to 3, **characterised in that** a central portion of a stack mould is fixed on the rotary plate (13), wherein the central portion is, for example, a middle plate (11) or a prismatic mould carrier.

5. The horizontal injection moulding machine according to any one of claims 1 to 4, **characterised in that** the base plate (14) is configured as substantially H-shaped and that the cross-piece of the H-shaped base plate and the rotary plate are configured in such a manner that moulded parts can drop down in the free space between the legs (15, 16, 17, 18) of the H.

6. The horizontal injection moulding machine according to claim 4 or 5, **characterised in that** one or more eyebolts (38) are provided on the upper side of the central portion (11) and/or the fixed (9) and/or the movable tool half (10).

7. The horizontal injection moulding machine according to any one of claims 4 to 6, **characterised in that** one or more transport plates (39) are provided on the upper side over the entire tool, by which means the tool parts can be held together and inserted and dismantled as an entire unit.

8. The horizontal injection moulding machine according to any one of claims 1 to 7, **characterised in that** means for holding moulded parts (49) produced between the fixed and the movable half of a tool (47, 48) clamped on the tool clamping plates (3, 4) are provided on the rotary plate (13), for example, retaining strips or retaining frames (45).

9. The horizontal injection moulding machine according to any one of claims 1 to 8, **characterised in that** hydraulic ejection cylinders (28-35) are provided in each of the dividing planes of the mould halves, wherein at least two, preferably four ejection cylinders are provided in each dividing plane.

10. The horizontal injection moulding machine according to any one of claims 1 to 9, **characterised in that** the base plate (14) extends so far in the longitudinal direction of the machine that when the tool is closed, there is only a small distance (safety distance) from each mould clamping plate (3, 4) of the horizontal injection moulding machine.

11. The horizontal injection moulding machine according to any one of claims 1 to 10, **characterised in that** the base plate (14) is configured to be sufficiently long in the longitudinal direction of the machine that when the tool is closed, it extends below the tool clamping plates (3, 4) into the region beyond said tooling clamping plates (3, 4).

## Revendications

1. Presse d'injection horizontale avec une plaque de serrage d'outil fixe (3) et une plaque de serrage d'outil mobile (4), avec des longerons (5, 6, 7, 8) situés entre les deux plaques de serrage d'outil (3, 4) ainsi qu'avec un dispositif de rotation (40) pour outils d'injection, situé entre les plaques de serrage d'outil (3, 4) et mobiles parallèlement à l'axe longitudinal de la presse et un dispositif de rotation pour outils d'injection séparé des longerons (5, 6, 7, 8),
**caractérisée en ce que**
le dispositif de rotation (40) comporte une plaque de fond (14), **en ce que** un plateau tournant (13) est disposé en rotation autour d'un axe vertical monté sur la plaque de fond (14), **en ce qu'**une couronne dentée (43) est prévue sur le plateau tournant (13), et **en ce qu'**un moteur électrique ou hydraulique (49) est prévu pour entraîner le plateau tournant (13), une roue d'entraînement (44) pouvant être entraînée avec celui-ci, laquelle est en prise avec la couronne dentée (43)prévue sur le plateau tournant (13).

2. Presse d'injection horizontale selon la revendication 1, **caractérisée en ce que**, pour le déplacement du dispositif de rotation, celui-ci est couplé avec les deux plaques de serrage d'outil (3, 4), de telle sorte que, lors du déplacement de la plaque de serrage d'outil mobile (4), le dispositif de rotation est déplacé en même temps, par exemple grâce à des crémaillères (36, 37), des broches, en particulier des broches à pas rapide ou un vérin hydraulique.

3. Presse d'injection horizontale selon la revendication 1, **caractérisée en ce que** le dispositif de rotation peut être déplacé indépendamment de la plaque de serrage d'outil mobile (4) parallèlement à l'axe longitudinal de la presse, par exemple à l'aide d'unités de vérins hydrauliques.

4. Presse d'injection horizontale selon l'une quelconque des revendications 1 à 3, **caractérisée en ce que**, sur le plateau tournant (13), la partie centrale d'un outil étagé est fixée, la partie centrale étant par exemple une plaque centrale (11) ou un support de forme prismatique.

5. Presse d'injection horizontale selon l'une quelconque des revendications 1 à 4, **caractérisée en ce que** la plaque de fond (14) est sensiblement en forme de H et **en ce que** l'élément transversal de la plaque de fond en forme de H et le plateau tournant sont configurés de telle sorte que des pièces formées puissent tomber vers le bas dans l'espace libre entre les montants (15, 16, 17, 18) du H.

6. Presse d'injection horizontale selon la revendication 4 ou 5, **caractérisée en ce qu'**un ou plusieurs anneau(x) à vis (38) est (sont) prévu(s) sur la face supérieure de la partie centrale (11) et/ou de la moitié d'outil fixe (9) et/ou mobile (10).

7. Presse d'injection horizontale selon l'une quelconque des revendications 4 à 6, **caractérisée en ce qu'**une ou plusieurs languette(s) de transport (39) est(sont) prévue(s) sur la face supérieure au-dessus de l'ensemble de l'outil, languettes avec lesquelles les parties d'outil peuvent être maintenues ensemble et montées et démontées en formant une unité.

8. Presse d'injection horizontale selon l'une quelconque des revendications 1 à 7, **caractérisée en ce que**, sur le plateau tournant (13), des moyens sont prévus pour maintenir les pièces formées (49) produites par la moitié fixe et la moitié mobile d'un outil (47, 48) serré entre les plaques de serrage d'outil (3, 4), par exemple des barres de maintien ou un cadre de maintien (45).

9. Presse d'injection horizontale selon l'une quelconque des revendications 1 à 8, **caractérisée en ce que** respectivement dans la zone des plans de séparation des moitiés formées sont prévus des vérins pousseurs hydrauliques (28 à 35), au moins deux, de préférence quatre vérins pousseurs étant prévus dans chaque plan de séparation.

10. Presse d'injection horizontale selon l'une quelconque des revendications 1 à 9, **caractérisée en ce que** la plaque de fond (14) va aussi loin dans le sens longitudinal que, lorsque l'outil est fermé, il ne reste qu'un petit intervalle (intervalle de sécurité) avec chaque plaque de serrage d'outil (3, 4) de la presse d'injection horizontale.

11. Presse d'injection horizontale selon l'une quelconque des revendications 1 à 10, **caractérisée en ce que** la plaque de fond (14) est aussi longue dans le sens longitudinal que, lorsque l'outil est fermé, elle passe sous les plaques de serrage d'outil (3, 4), jusqu'à la zone extérieure des plaques de serrage d'outil (3, 4).
